Europäisches Patentamt

European Patent Office

Office européen des brevets

(11) Publication number: **0 225 743 B1**

# EUROPEAN PATENT SPECIFICATION

(45) Date of publication of patent specification: **20.03.91**  (51) Int. Cl.⁵: **B60C 9/08**, B60C 9/20, B60C 9/02

(21) Application number: **86308884.5**

(22) Date of filing: **14.11.86**

(54) Radial motorcycle tyre.

(30) Priority: **07.12.85 GB 8530213**

(43) Date of publication of application:
**16.06.87 Bulletin 87/25**

(45) Publication of the grant of the patent:
**20.03.91 Bulletin 91/12**

(84) Designated Contracting States:
**DE FR GB IT**

(56) References cited:
DE-A- 2 922 651
FR-A- 2 177 884
FR-A- 2 178 001
FR-A- 2 398 624
GB-A- 2 005 201

(73) Proprietor: **SP TYRES UK LIMITED**
**Fort Dunlop**
**Erdington Birmingham B24 9QT(GB)**

(72) Inventor: **Ingley, Peter**
**10 Chandlers Drive**
**Amington Tamworth(GB)**
Inventor: **Griffiths, Gerald Anthony**
**19 Linden Avenue, Chase Terrace**
**Walsall, West Midlands WS7 8AX(GB)**
Inventor: **Watkins, David Robert**
**18 Consey Road**
**Great Barr Birmingham, B43 7RG(GB)**

(74) Representative: **Stewart, Charles Geoffrey**
**SP TYRES UK LIMITED Tyre Technical Division**
**Fort Dunlop Birmingham B24 9QT(GB)**

## Description

This invention relates to radial motorcycle tyres both for high speed road use and racing use.

When considered in cross-section radial motorcycle tyres have sharply curved tread regions reinforced to provide for tread stability and interconnected at each edge to bead regions by flexibly tyre sidewalls which are replaced by radially extending reinforcement cores. The reinforcement cords are anchored in the bead regions by wrapping them around bead reinforcement cords or hoops and hard rubber apex members are positioned on the bead cores projecting radially outwards to provide bead and lower sidewall stiffness.

High performance radial motorcycle tyres have begun to use additional sidewall stiffening components in both the shoulder and lower sidewall areas to enhance the stability of the tyre section and provide for good vehicle handling.

A tyre according to the preamble of claim 1 is known, e.g. from FR-A-2177884.

The inventors of the present invention has found, however, that an opposite approach when carried out in a particular way can give good stability and handling but provide an addition and most unexpected improvement in tyre-to road grip.

According to the present invention a motorcycle tyre is provided comprising a ground contacting tread region reinforced between its edges by a breaker structure and having a substantially curved profile in radial cross-section of the tyre, a pair of tyre beads each reinforced by a substantially inextensible bead reinforcement hoop and a tyre sidewal between each tread edge and bead region each sidewall being reinforced by not more than two mutually contacting layers of carcass ply reinforcement for at least 80% of the length of the sidewall from the tread edge to bead hoop such that the said 80% or more of the sidewall is substantially flexible wherein the carcass is a radial carcass, the tyre sidewalls each extends entirely radially and axially inwardly of the tread edges, and the length of the tyre sidewalls is less than 35% of the tyre sectional height.

Preferably the sidewall includes not more than two inwardly contacting layers of carcass ply reinforcement for at least 90% of the length of the sidewall to further extend the length of the sidewall which is flexible. The carcass ply reinforcements are mutually in contact so that maximum flexibility is obtained and it should be noted that the lack of an apex strip of the bead core gives this mutual contact and full flexibility right down to the bead reinforcement itself.

Preferably for at least 50% of the sidewall length from the tread edge towards the bead there is only one layer of carcass ply reinforcement by means of the ply overlap being short.

The preferred tyre carcass has only a single ply of reinforcement material without ply overlap.

The length of the tyre sidewalls is preferably less than 25%, of the tyre sectional height.

Further aspects of the present invention will be apparent from the following description, by way of example only, of one embodiment of the invention which relates to a 375/700 18 inch motocycle race tyre of the slick or patternless type.

The tyre comprises a tread region at which has a convex ground engaging surface (2) to allow for banking over of the machine and a toroidal carcass which together with the wheel rim (not shown) forms the air chamber for the tyre. The carcass comprises sidewall (3) and bead regions (4) reinforced by bead reinforcement hoops (5). The tread region (1) is reinforced by two fabric breaker reinforcement plies (6, 7) each comprising conventional weftless tyre fabric and these breaker plies (6, 7) extend into the tread edge regions (8).

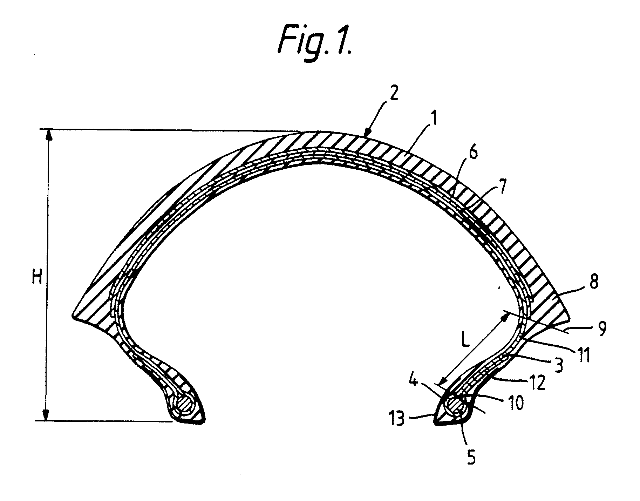

The sidewalls (3) which extend radially and axially inw ards of the tread edge regions (8) are shorter than any conventional tyres and approximately 30% of the sectional height of the tyre H. The length of the sidewalls (3) being measured from the extremity (9) of the tread edge to the nearest surface position 10 of the bead reinforcement (5) and this length is marked L in the drawing.

The carcass of the tyre is reinforced by a single radial carcass reinforcement ply (11) which comprises substantially weftless textile tyre fabric arranged with the cord at $0°$ to the radial plane. It should be appreciated, however, that small angles may still be used of this ply in the conventional manner for radial tyres. The carcass ply (11) is anchored to the bead reinforcement (5) by being wrapped around it and extending radially outwards for a ply overlap region (12). The ply overlap extends for an outstanding of L over 2 from the surface portion (10) of the bead reinforcement (5). In the ply overlap region (12) the reinforcement material of the overlap is adjacent to the main reinforcement and any conventional bead apex member is provided. The resultant sidewall reinforcement is substantially shorter than previous tyres of this type provides a tyre structure which is stable, gives good vehicle handling and yet provides a lighter tyre than hitherto. Most importantly, however, an unexpected advantage is obtained in that the tyre when considered in the banked over construction of the motorcycle has been found to have an increased contact area when compared to a identical tyre with standard sidewalls lengths and constructions including apex strips. This most unexpected advantage is particularly valuable in providing increased cornering power for race machines.

A tyre shown also includes a bead chafer strip (13) extending around the bead region but this has no effect on the present invention. Whilst so far the invention has been found to be particularly useful for motorcycle race tyres the invention is not so limited and applies also to motorcycle tyres for other purposes whether the high degrees of tyre stability provided and high grip are required.

## Claims

1. A motorcycle tyre comprising a ground contacting tread region (2) reinforced between its edges (8) by a breaker structure (6,7) and having a substantially curved profile in radial cross-section of the tyre, a pair of tyre beads (4) each reinforced by a substantially inextensible bead reinforcement hoop (5) and a tyre sidewall (3) between each tread edge (8) and bead region (4), each sidewall (3) being reinforced by not more than two mutually contacting layers (11) of carcass ply reinforcement for at least 80% of the length(L) of the sidewall (3) from the tread edge (8) to bead hoop (5) such that the said 80% or more of the sidewall (3) is substantially flexible characterised in that the carcass is a radial carcass, the tyre sidewalls (3) each extends entirely radially and axially inwardly of the tread edges (8), and the length (L) of the tyre sidewalls (3) is less than 35% of the tyre sectional height (H).

2. A tyre according to claim 1 characterised in that the length of the tyre sidewalls (3) is less than 25% of the tyre section height (H).

3. A tyre according to claim 1 or 2 characterised in that for at least 90% of the length of the sidewall (3) the sidewall (3) includes not more than two mutually contacting layers (11,12) of carcass ply reinforcement.

4. A tyre according to any of claims 1 to 3 characterised in that for at least S0% of the sidewall length (L) from the tread edge (8) towards the bead (4) there is only one layer (11) of carcass ply reinforcement.

5. A tyre according to any one of claims 1-4 characterised in that the bead region (4) has no bead apex strip or other component of hard rubber extending radially outwards of the bead reinforcement hoop (5).

6. A tyre according to claim 5 characterised in that the tyre sidewall (3) includes only one ply (11) of carcass reinforcement material and there is no ply overlap (11) the ply being anchored only at the bead hoop.

## Revendications

1. Pneumatique de motocycle comportant une zone de bande de roulement en contact avec le sol (2) renforcée entre ses bords (8) par une structure de protection (6, 7) et ayant un profil sensiblement courbe en section radiale du pneumatique, une paire de talons de pneumatique (4) renforcés chacun par une ceinture d'armature de talon sensiblement inextensible (5) et un flanc de pneumatique (3) entre chaque bord de bande de roulement (8) et chaque zone de talon (4), chaque flanc (3) étant renforcé par au plus deux couches en contact mutuel (11) de nappe d'armature de carcasse sur au moins 80% de la longueur (L) du flanc (3) du bord de bande de roulement (8) jusqu'à la ceinture de talon (5) de telle sorte que les dits 80% ou plus du flanc (3) sont sensiblement flexibles, caractérisé en ce que la carcasse est une carcasse radiale, les flancs de pneumatique (3) s'étendent chacun entièrement radialement et axialement vers l'intérieur des bords de bandes de roulement (8), et la longueur (L) des flancs de pneumatique (3) est inférieure à 35% de la hauteur de section (H) du pneumatique.

2. Pneumatique selon la revendication 1, caractérisé en ce que la longueur des flancs de pneumatique (3) est inférieure à 25% de la hauteur de section (H) du pneumatique.

3. Pneumatique selon la revendication 1 ou 2, caractérisé en ce que sur au moins 90% de la longueur du flanc (3), le flanc (3) comporte au plus deux couches en contact mutuel (11, 12) de nappe d'armature de carcasse.

4. Pneumatique selon l'un quelconque des revendications 1 à 3, caractérisé en ce que sur au moins 50% de la longueur de flanc (L) du bord de bande de roulement (8) jusqu'au talon (4), il n'y a qu'une couche (11) de nappe d'armature de carcasse.

5. Pneumatique selon l'une quelconque des revendications 1 à 4, caractérisé en ce que la zone de talon (4) ne possède pas de bande de garniture ou autre composant en caoutchouc dur s'étendant radialement vers l'extérieur de la ceinture d'armature de talon (5).

6. Pneumatique selon la revendication 5, caractérisé en ce que le flanc de pneumatique (3) comporte un seul nappe (11) de matière d'armature de carcasse et il n'y a pas de recouvrement de nappe (11), la nappe étant ancrée uniquement au niveau de la ceinture de talon.

**Ansprüche**

1. Motorradreifen mit einem Bodenberührungs-Laufstreifenbereich (2), der zwischen seinen Kanten (8) durch einen Gürtelaufbau (6, 7) verstärkt ist und mit einem im radialen Querschnitt des Reifens im wesentlichen gekrümmten Profil, zwei Reifenwulsten (4), die jeweils durch einen im wesentlichen undehnbaren Wulstverstärkungsreif (5) verstärkt sind, und jeweils einer Reifenseitenwand (3) zwischen jeder Laufstreifenkante (8) und jedem Wulstbereich (4), wobei jede Seitenwand (3) über mindestens 80% der Länge (L) der Seitenwand (3) von der Laufstreifenkante (8) zu dem Wulstreif (5) durch nicht mehr als zwei sich gegenseitig berührende Karkaßlagenverstärkungs-Schichten (11) verstärkt ist, so daß die genannten 80% oder mehr der Seitenwand (3) im wesentlichen flexibel sind, dadurch gekennzeichnet, daß die Karkasse eine Radialkarkasse ist, daß die Reifenseitenwände (3) sich jeweils insgesamt radial und axial von den Laufstreifenkanten (8) nach innen erstrecken und daß die Länge (L) der Reifenseitenwände (3) weniger als 35% der Reifenquerschnittshöhe (H) beträgt.

2. Reifen nach Anspruch 1, dadurch gekennzeichnet, daß die Länge der Reifenseitenwände (3) weniger als 25% der Reifenquerschnittshöhe (H) beträgt.

3. Reifen nach Anspruch 1 oder 2, dadurch gekennzeichnet, daß die Seitenwand (3) über mindestens 90% der Länge der Seitenwand (3) nicht mehr als zwei sich gegenseitig berührende Karkaßlagenverstärkungs-Schichten (11, 12) enthält.

4. Reifen nach einem der Ansprüche 1 bis 3, dadurch gekennzeichnet, daß über mindestens 50% der Seitenwandlänge (L) von der Laufstreifenkante (8) zum Wulst (4) hin nur eine Karkaßlagenverstärkungs-Schicht (11) vorhanden ist.

5. Reifen nach einem der Ansprüche 1 bis 4, dadurch gekennzeichnet, daß der Wulstbereich (4) keinen Wulstkernreiterstreifen oder anderen Bestandteil aus Hartgummi besitzt, der sich von dem Wulstverstärkungsreif radial nach außen (5) erstreckt.

6. Reifen nach Anspruch 5, dadurch gekennzeichnet, daß die Reifenseitenwand (3) nur eine Karkaßverstärkungsmaterial-Lage (11) enthält und daß kein Überschlag der Lage (11) vorhanden ist, sondern die Lage nur am Wulstreif verankert ist.

# Fig.1.